# FASCICULE DE BREVET EUROPEEN

(11) **EP 1 697 482 B1**
(45) Date de publication et mention de la délivrance du brevet: **04.07.2007**
(21) Numéro de dépôt: 04786251.1
(22) Date de dépôt: 02.08.2004
(51) Int. Cl.: C09K 8/32

(54) **FLUIDE DE PUITS À BASE D' HUILE COMPRENANT UN SYSTÈME ÉMULSIFIANT NON-POLLUANT, UTILISABLE POUR TOUT TYPE D' HUILE DE BASE ET STABLE VIS-À -VIS DE LA FORMATION DES HYDRATES DE GAZ**
ÖLBASIERTE BOHRFLÜSSIGKEIT MIT EINEM UMWELTMÄSSIG UNBEDENKLICHEN, FÜR ALLE BASISÖLE EINSETZBAREN UND GEGENÜBER GASHYDRATBILDUNG STABILEN EMULGIERSYSTEM
OIL-BASED DRILLING FLUID COMPRISING A NON-POLLUTING EMULSIFYING SYSTEM WHICH CAN BE USED FOR ANY BASE OIL AND WHICH IS STABLE IN RESPECT OF GAS HYDRATES FORMATION

(30) Priorité: 28.08.2003 FR 0310268
(43) Date de publication de la demande: 06.09.2006
(73) Titulaire: Institut Français du Pétrole, 92852 Rueil Malmaison Cédex (FR); Oleon N.V., 9940 Ertvelde (BE)
(72) Inventeur: DALMAZZONE, Christine, F-78000 Versailles (FR); AUDIBERT-HAYET, Annie, F-78290 Croissy sur Seine (FR); DEWATTINES, Carine, B-1861 Wolvertem (BE)
(74) Mandataire: Guillat-Terpend, Michèle
(86) Numéro de dépôt international: PCT/FR2004/002076
(87) Numéro de publication internationale: WO 2005/023959

(56) Documents cités:
- WO-A-01/94495
- US-A- 2 793 188
- US-A- 4 108 779
- US-A1- 2003 114 316

## Description

La présente invention concerne l'utilisation d'un système émulsifiant non-toxique capable de stabiliser une émulsion eau-dans-huile, pour la formulation de fluides de puits à base d'huile utilisables en conditions de forage en offshore, et plus particulièrement en offshore profond (entre 0 et 150°C).

Lorsque l'on fore un puits, et plus particulièrement un puits de pétrole, on est contraint d'utiliser un fluide de puits, en particulier un fluide de forage, dit également « boue de forage », pour transporter jusqu'à la surface les déblais générés par le forage. Ce fluide de puits doit également exercer diverses fonctions complémentaires : permettre le refroidissement et la lubrification de l'outil, maintenir les parois du puits, exercer une contre-pression suffisante et, enfin, éviter l'endommagement de la formation.

Deux types de fluides de puits sont principalement utilisés dans les opérations de forage : les fluides à base d'eau ou « boues à l'eau » et ceux à base d'huile ou « boues à l'huile ». Les boues à l'eau sont beaucoup plus économiques et moins polluantes que les boues à l'huile, mais ces dernières présentent des avantages opérationnels évidents, notamment dans le cas du forage de puits très profonds : bonne réduction des frottements, fluide inerte vis-à-vis des roches de la formation et en particulier des argiles, faible endommagement de la zone de production, etc.

Typiquement, les boues à l'huile sont des émulsions eau-dans-huile, contenant de 5 à 40 % en volume d'une phase aqueuse de saumure dispersée. Ces émulsions inverses comprennent principalement trois types de constituants :
- des émulsifiants pour assurer la stabilité de l'émulsion ;
- des argiles organophiles pour contrôler les propriétés rhéologiques du fluide, et en particulier la thixotropie ;
- des agents alourdissants, comme le sulfate de baryum (ou barytine) ou le carbonate de calcium (CaCO₃) pour ajuster la densité du fluide.

Trois problèmes importants se posent concernant l'utilisation des boues à l'huile pour les forages de puits:
- un problème de stabilité en température des émulsions : les émulsifiants assurant la stabilité des émulsions doivent en effet maintenir les gouttelettes d'eau en émulsion sur une large gamme de température, de 0 jusqu'à 150°C. Si l'émulsion se sépare par coalescence des gouttelettes d'eau, le fluide perd ses propriétés rhéologiques et, surtout, risque d'endommager gravement la formation;
- un problème lié à la formation éventuelle d'hydrates de gaz en offshore très profond (> 2000 m) : en effet, en cas d'arrêt de circulation du fluide de forage, la température du fluide peut très rapidement atteindre des températures voisines de 0°C en fond de mer. De plus, les pressions rencontrées seront supérieures à 200 bar. Par conséquent, si le fluide rencontre du gaz, toutes les conditions favorables à la formation d'hydrates de gaz se trouvent réunies (haute pression, température basse, présence d'eau dans le fluide et présence de gaz). Ces hydrates de gaz sont des structures solides comprenant de l'eau et du gaz : l'eau contenue dans les fluides de forage va donc former, dans certaines conditions de températures et de pression qui dépendent essentiellement de la composition de la phase aqueuse, une cage solide qui va emprisonner les molécules de gaz. La formation de ces hydrates de gaz solides peut avoir des conséquences particulièrement graves : perte des propriétés rhéologiques de la boue (due au cassage de l'émulsion eau-dans-huile par les cristaux d'hydrates dans le cas des boues à l'huile, et à la croissance des cristaux dans le cas des boues à l'eau), agglomération et dépôt des cristaux d'hydrate pouvant entraîner le bouchage des lignes de duse ainsi que de l'annulaire, voire l'interruption des opérations de forage et éventuellement la destruction des engins de forage, venue brutale de gaz en surface lors de la dissociation des hydrates, etc. Les émulsifiants doivent donc avoir des propriétés telles que l'émulsion doit rester stable, même en présence d'hydrates ;
- un problème d'ordre environnemental, les émulsifiants employés devant non seulement être efficaces, mais également le moins toxique possible.

D'une manière générale, du fait de ces contraintes environnementales, lorsque les systèmes traditionnels à base d'huiles riches en aromatiques de type diesel ont évolué vers des formulations à base d'huiles moins nocives pour l'environnement, on a observé que généralement les boues étaient devenues moins stables en température. Ceci peut être dû à la stabilité en température de l'huile utilisée elle-même ou au système émulsifiant qui ne permet pas une stabilité de l'émulsion sur une large gamme de température. Ceci peut donc entraîner des problèmes de contrôle de filtrat aux températures élevées. Cette perte de propriétés est à l'origine de problèmes d'endommagement des réservoirs (infiltration d'eau) et de pertes importantes de productivité du puits foré avec ces fluides.

Selon la présente invention, on propose l'utilisation dans des fluides de puits d'un système émulsifiant qui assure la stabilité de la boue à l'huile de 0 à 150°C, quelle que soit l'huile de base utilisée, même en présence d'hydrates de gaz et qui, de plus, présente une toxicité réduite.

Le système émulsifiant utilisé dans l'invention associe au moins un constituant A consistant en au moins un ester formé entre au moins un acide monocarboxylique, linéaire ou ramifié, et au moins un alcool (monoalcool ou polyol), linéaire ou ramifié, et au moins un constituant B consistant en au moins un acide gras polymérisé.

L'ester peut être obtenu par estérification, transestérification ou interestérification.

Le constituant A consiste plus particulièrement en au moins un ester formé entre au moins un acide monocarboxylique, linéaire ou ramifié, contenant de 8 à 24 atomes de carbone, plus spécialement de 14 à 18 atomes de carbone, et au moins un alcool, linéaire ou ramifié contenant de 2 à 200 atomes de carbone et plus spécialement de 6 à 30 atomes de carbone

L'acide peut être par exemple un acide monocarboxylique linéaire ou ramifié, saturé ou insaturé, ou hydroxylé, répondant par exemple à l'une des formules suivantes dans lesquelles n = 7 :

| | |
|---|---|
| CH₃-(CH₂)ₙ-COOH | acide octanoïque |
| CH₃-CH(CH₃)-(CH₂)ₙ-COOH | acide undécénoïque |
| CH₃-CH₂-CH(CH₃)-(CH₂)ₙ-COOH | acide laurique |
| CH₃-(CH₂)ₙ-CH=CH-(CH₂)ₙ-COOH | acide oléique |
| CH₃-(CH₂)ₙ-₂-CH(OH)-CH₂-CH=CH-(CH₂)ₙ-COOH | acide ricinoléique |
| CH₃-(CH₂)n-₁-(CH=CH-CH₂-CH=CH)-(CH₂)ₙ-COOH | acides arachidique et gadoléique |
| CH₃-(CH₂)ₙ-(CH=CH-CH=CH-CH=CH)-(CH₂)ₙ-COOH | acide érucique |

L'alcool peut être:
- un monoalcool :
   - primaire: R-CH₂-OH
   - secondaire: (R-)2 CH-OH
   - monoalcool tertiaire (R-)₃ C-OH
      avec R = CₓH_{y}, x= 1 à 21 et y = 2x+1
- un alcool polyhydroxylé :
   - un diol, tel que par exemple :
      - l'éthylèneglycol et ses polymères:
         HO-(CH₂-CH₂)-OH
         HOCH₂-CH₂-O(CH₂-CH₂-O)ₘ-CH₂-CH₂OH avec m = 1 à 100

      - le propylène glycol : CH₃-CHOH-CH₂-OH
      - le néopentylglycol : HOCH₂-C(CH₃)(CH₃)-CH₂OH
   - un triol, tel que par exemple:
      - le glycérol : CH₂OH-CHOH-CH₂OH
      - le triméthylolpropane : CH₂OH-C(CH₂OH)(CH₂OH)-CH₂CH₃
   - un tétraalcool, tel que par exemple:
      - le pentaérhytritol: (CH₂OH)₄C
   - un hexol, tel que par exemple:
      - le sorbitol: CH₂OH-CHOH-CHOH-CHOH-CHOH-CH₂OH et son anhydride cyclique, le sorbitan, ou encore un dérivé de sorbitan.
   - un polyglycérol :
      CH₂OH-CHOH-CH₂-(O-CH₂-CHOH-CH₂)ₚ-O-CH₂-CHOH-CH₂OH avec p =1 à 8

Les polyols peuvent être estérifiés de manière totale ou partielle selon la stoechiométrie acide gras/alcool utilisée lors de la réaction d'estérification, la nature des acides gras étant celle décrite ci dessus.

Plus spécialement, l'Équilibre Hydrophile / Lipophile (HLB) de l'ester est en général compris entre 2 et 12, et de préférence entre 3 et 8.

L'ester préféré selon l'invention est un ester ou un mélange d'esters de sorbitol, de sorbitan ou de ses dérivés et plus particulièrement le mélange désigné par monooléate de sorbitan.

Le constituant B présent dans le système émulsifiant utilisé dans l'invention est issu d'une réaction de dimérisation d'acides gras monocarboxyliques insaturés renfermant par exemple de 8 à 18 atomes de carbone. Le produit de réaction fournit un mélange de composés contenant de 16 à 80 atomes de carbone et constitué d'un mélange de monomères, dimères, trimères et oligomères supérieurs, et plus particulièrement de dimères (de 16 à 36 atomes de carbone).

Les dimères peuvent être représentés par la formule : 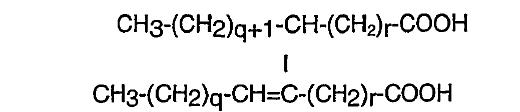 la somme q + r pouvant prendre une valeur de 4 à 14.

Les trimères peuvent être représentés par la formule : 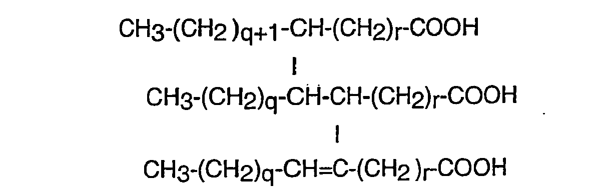 la somme q + r pouvant prendre une valeur de 4 à 14.

Le constituant B considéré de préférence est un mélange de dimères d'acide gras mono-insaturé de 16 atomes de carbone (acide palmitique) et d'acide gras mono-insaturé de18 atomes de carbone (acide oléique).

De préférence, le système émulsifiant utilisé dans le fluide de l'invention comprendra de 10 à 95 % en poids, de préférence de 30 à 90 % en poids et de manière encore plus préférée de 50 à 80 %, en poids de constituant A. Le co-tensioactif (constituant B) représente alors de 5 à 90 % en poids, de préférence de 10 à 70 % en poids et de manière encore plus préférée de 20 à 50 %, en poids du système émulsifiant

Dans la préparation des fluides de puits à base d'huile selon l'invention, la phase continue ou phase huile peut contenir tout type d'huile de base utilisée communément pour former ce type de fluide : par exemple du gazole, du pétrole brut, de l'essence, du kérosène ou, comme il est maintenant recommandé pour des raisons de protection de l'environnement, des esters d'huiles de source naturelle, végétale ou animale (tels que les Radiagreen BDMF®, Radiagreen DW®, et Radiagreen VLV® d'Oleon N.V. (Belgique) ),
ou des coupes hydrocarbures de faible toxicité, comme les oléfines (Ultidrill® de Dowell Schlumberger) ou des coupes de n-alcanes (XP07® de Baroid, EDC 95® de BHI ou HDF 2000® de Total Solvant), dont la principale caractéristique est de ne pas contenir ou de contenir très peu d'hydrocarbures aromatiques, principaux responsables de la forte toxicité des huiles de base classiques.

La concentration en huile de base peut être comprise entre 10 et 95 %, de préférence entre 20 % et 90 % en volume.

La quantité d'eau utilisée pour la fabrication de ces fluides base d'huile se situe entre 5 et 90 %, de préférence entre 80 et 10 %, en volume de fluide. Cette phase aqueuse peut être de l'eau douce, de l'eau salée type eau de mer ou une saumure. La présence de fortes concentrations en NaCl, CaCl₂, CaCO₃ ou CaSO₄ n'a pas d'effet négatif sur la stabilité de l'émulsion produite, l'agent émulsifiant étant non-ionique, donc peu sensible à la présence de sels.

La composition exacte du fluide de puits dépend de l'application particulière à laquelle est destiné ce fluide. Cependant, dans la plupart des cas, des concentrations en émulsifiant allant de 1 à 30 % en poids par rapport à la phase aqueuse seront suffisantes pour obtenir des résultats satisfaisants.

Le fluide peut contenir de 5 à 25 % en poids de chaux, de 5 à 15 % en poids d'argile traitée organophile et au moins un agent alourdissant tel que le sulfate de baryum (ou barytine) ou le carbonate de calcium (CaCO₃) ou encore les oxydes de fer, tels que l'hématite, en une quantité suffisante pour atteindre une densité allant en général jusqu'à environ 3. Il peut contenir en outre jusqu'à environ 10 % en poids de réducteur de filtrat.

Selon l'invention, le fluide de puits ainsi constitué peut être utilisé pour le forage, la complétion ou le workover d'un puits, en le faisant circuler en quantité suffisante pour obtenir les résultats recherchés.

Les exemples suivants illustrent l'invention sans en limiter la portée. Sauf indication contraire, les pourcentages sont donnés en poids.

Dans ces exemples, les boues ont été fabriquées à l'aide d'un appareil SILVERSON L4RT® à une vitesse d'agitation de 6000 trs/min. Les produits sont ajoutés dans l'ordre suivant avec entre parenthèses le temps d'agitation à chaque étape :
1) huile de base (5 min)
2) émulsifiants (5 min)
3) chaux (5 min)
4) réducteur de filtrat (5 min)
5) argile (5 min)
6) saumure (15 min)
7) alourdissant (20 min)

Cependant, dans le cas où l'on utilise la Pliolite DF01® comme réducteur de filtrat, la procédure est modifiée : on incorpore la Pliolite DF01® en deuxième étape dans l'huile de base (15 min d'agitation) et on laisse mûrir à 80°C sous 170 psi pendant 24 heures. On poursuit ensuite la fabrication en ajoutant les produits comme mentionné dans les étapes 2) à 7) ci-dessus, en omettant l'étape 4).

Dans ces exemples, la stabilité des boues de forage selon l'invention a été testée de différentes manières :
- tests APl (American Petroleum Institute - API Bulletin RP 13B-2, 1990) de stabilité électrique sur boues complètes avant et après vieillissement, décrits dans l'ouvrage « Composition and Properties of Drilling Completion Fluids », 5th Edition, H. C. H. Darley and George Gray, Gulf Publishing Company, 1988, page 116;
- tests de filtration API HP/HT (Haute Pression/Haute Température) avant et après vieillissement et tests rhéologiques.

En général, plus la stabilité électrique est élevée et plus l'émulsion est stable. De plus, pour que le fluide soit considéré comme stable, il faut que le volume de filtrat recueilli après filtration soit faible et monophasique (phase huile). En effet, la présence d'eau dans l'huile peut être très endommageante pour la formation.

Des mesures calorimétriques réalisées en DSC (Differential Scanning Calorimetry) avant et après vieillissement sur des boues complètes permettent également de quantifier l'influence du vieillissement en température ou de la formation d'hydrates de gaz sur la taille des gouttes de l'émulsion.

On a utilisé les systèmes émulsifiants définis ci-dessous :
- (1) système selon l'invention, constitué de 70 % en poids de monooléate de sorbitàn et de 30 % en poids de dimère d'acide gras en C₁₆-C₁₈
- (2) et (2bis) systèmes NOVA de la société M-I : Novawet®/Novamul® ;
- (3) système (1) avec 1,275 % de Pliolite DF01® ;
- (4) système (1) avec 3,0% de Pliolite DF01®;
- (5) système Emul HT®/Interdrill FL® de la société M-I ;
- (6) système Emul HT®/Interdrill FL®/Interdrill LORM® de la société M-I ;
- (7) système Versamul®/Versacoat® de la société M-I ;
- (8) système Versamul®/Versawet® de la société M-I.

Dans les Tableaux 2, 3, 5, 6, 8, 9, 11 et 12, VA est la viscosité apparente en centipoises, VP, la viscosité plastique en centipoises, YV, la valeur de seuil en livres pour 100 pieds carrés, Gel 0/10 représente les valeurs de gel à 10 s et 10 min en livres pour 100 pieds carrés, et Stab. Él., la stabilité électrique en volts et Filtrat représente le volume filtré en 30 minutes à la même température que la température de vieillissement et sous une différence de pression ΔP de 35 bars.

### Exemple 1 : Stabilité des boues formulées avec différentes huiles de base : Radiagreen BDMF®, Radiagreen DW®, Radiagreen VLV® et HDF 2000®

La composition des fluides et les résultats des tests sont présentés dans les Tableaux ci après.

La Pliolite DF01® ajoutée comme réducteur de filtrat est un produit synthétisé par la société Eliokem. Carbo=gel® et VG69® sont des argiles organophiles fournies respectivement par BHI et M-I.

**Tableau 1**

| **Radiagreen BDMF® + système (1)** | **Radiagreen BDMF® + système (2)** |
|---|---|
| 800 mL d'huile (696 g) | 800 mL d'huile (696 g) |
| 8,87 g de Pliolite (1,275 %) mûrissement 24 heures | 8,87 g de Pliolite (1,275 %) mûrissement 24 heures |
| 20,88 g système (1) | 20,88 g système (2) : |
| | (14,62 g de Novamul + 6,26 g de Novawet) |
| 2,6 g de chaux (1,3 %) | 2,6 g de chaux (1,3 %) |
| 13 g de Carbogel® | 13 g de Carbogel® |
| 200 mL de saumure (300g/L) | 200 mL de saumure (300g/L) |
| Ajustement avec Baryte de Challiac d =1,2 | Ajustement avec Baryte de Challiac d =1,2 |

**Tableau 2**

| **Radiagreen BDMF® + système (1)** | | |
|---|---|---|
| État de la boue | Mûrie (80°C) | Vieillie (120°C) |
| VA (cP) | 52 | 46 |
| VP (cP) | 40 | 35 |
| YV (Lb/100ft²) | 24 | 22 |
| Gel 0\10 | 16\19 | 12\14 |
| Stab. Él. (V) | 1095 | 1269 |
| Filtrat (filtration HP/HT) | Quelques gouttes | 1,4 mL, monophasique |
| Cake | épaisseur < 1 mm | épaisseur 1 mm |

**Tableau 3**

| **Radiagreen BDMF® + système (2)** | | |
|---|---|---|
| État de la boue | Mûrie (80°C) | Vieillie (120°C) |
| VA (cP) | 39 | 43 |
| VP (cP) | 30 | 35 |
| YV (Lb/100ft²) | 18 | 16 |
| Gel 0\10 | 7\7 | 6\6 |
| Stab. Él. (V) | 1253 | 1227 |
| Filtrat | 0,2 mL, monophasiqu | 0,8 mL, monophasique |
| Cake | épaisseur < 1 mm | épaisseur < 1 mm |

**Tableau 4**

| **Radiagreen DW® + système (2 bis)** | **Radiagreen DW® système (1)** |
|---|---|
| (310 mL) d'huile (264 g) | 800 mL d'huile (680 g) |
| 7,92 g de Pliolite (3 %) | 20,4 g de Pliolite (3 %) |
| mûrissement 24 heures | mûrissement 24 heures |
| 66 mL système (2 bis) : | 20,40 g système (1) |
| (60 mL de Novamul + 6 mL de Novawet) | |
| 8 g de chaux | 2,6 g de chaux |
| 3,2 g de VG69® | 13 g de Carbogel® |
| 172 mL d'H₂O + 48 g de CaCl₂, 2H₂O | 200 mL de saumure (300g/L) |
| Ajustage avec Baryte de Challiac d = 1,2 | Ajustage avec Baryte de Challiac d =1,2 |

**Tableau 5**

| **Radiagreen DW® système (1)** | | |
|---|---|---|
| État de la boue | Mûrie (80°C) | Vieillie (120°C) |
| VA (cP) | 26 | 27 |
| VP (cP) | 24 | 26 |
| YV (Lb/100ft²) | 4 | 2 |
| Gel 0\10 | 4\4 | 4\4 |
| Stab. Él. (V) | 819 | 953 |
| Filtrat | Quelques gouttes, monophasique | 0,2mL, monophasique |
| Cake | épaisseur < 1 mm | épaisseur < 1 mm |

**Tableau 6**

| **Radiagreen DW® + système (2)** | | |
|---|---|---|
| État de la boue | Mûrie (80°C) | Vieillie (120°C) |
| VA (cP) | 37 | 31 |
| VP (cP) | 31 | 25 |
| YV (Lb/100ft²) | 12 | 12 |
| Gel 0\10 | 7\7 | 5\5 |
| Stab. ÉI. (V) | 741 | 464 |
| Filtrat | 0,3 mL, monophasique | 0,4 mL, monophasique |
| Cake | épaisseur < 1 mm | épaisseur < 1 mm |

**Tableau 7**

| **HDF 2000® + système (3)** | **HDF 2000® +système (4)** |
|---|---|
| 800 mL d'huilé (642 g) | 800 mL d'huile (642 g) |
| 8,87 g de Pliolite (1,275 %) mûrissement 24 heures | 19,26 g de Pliolite (3,0 %) mûrissement 24 heures |
| 19, 26 g système (1) | 19, 26 g système (1) |
| 2,6 g de chaux (1,3 %) | 2,6 g de chaux (1,3 %) |
| 11,3 g de Carbogel® | 11,3 g de Carbogel® |
| 200 mL de saumure (300g/L) | 200 mL de saumure (300g/L) |
| Ajustement avec Baryte de Challiac d =1,2 | Ajustement avec Baryte de Challiac d =1,2 |

**Tableau 8**

| **HDF 2000® + système (3)** | | |
|---|---|---|
| État de la boue | Mûrie (80°C) | Vieillie (120°C) |
| VA (cP) | 18 | 22 |
| VP (cP) | 15 | 16 |
| YV (Lb/100ft²) | 6 | 12 |
| Gel 0\10 | 4\4 | 5\5 |
| Stab. Él. (V) | 932 | 1080 |
| Filtrat | 1,1 mL, monophasique | 2,2 mL, monophasique |
| Cake | épaisseur < 1 mm | épaisseur 1 mm |

**Tableau 9**

| **HDF 2000 + système (4)** | | |
|---|---|---|
| État de la boue | Mûrie (80°C) | Vieillie (120°C) |
| VA (cP) | 21 | 26 |
| VP (cP) | 19 | 24 |
| YV (Lb/100ft²) | 4 | 4 |
| Gel 0\10 | 4\4 | 5\5 |
| Stab. Él. (V) | 665 | 869 |
| Filtrat | 0,8 mL, monophasique | 0,4 mL, monophasique |
| Cake | épaisseur < 1 mm | épaisseur < 1 mm |

**Tableau 10**

| **Radiagréen VLV + système (1)** |
|---|
| 800 mL d'huile (688 g) |
| 20,4 g de Pliolite (3 %) |
| mûrissement 24 heures |
| 20,64 g + système (1) |
| 2,6 g de chaux |
| 11,3 g de Carbogel® |
| 200 mL de saumure (300g/L) |
| Ajustement avec Baryte de Challiac d =1,2 |

**Tableau 11**

| **Radiagreen VLV + système OLEON (1)** | | |
|---|---|---|
| État de la boue | Mûrie (80°C) | Vieillie (120°C) |
| VA (cP) | 32 | 36 |
| VP (cP) | 26 | 33 |
| YV (Lb/100ft²) | 12 | 6 |
| Gel 0\10 | 6\6 | 6\6 |
| Stab. Él. (V) | 850 | 912 |
| Filtrat | 1,2 mL, monophasique | 0,6 mL, monophasique |
| Cake | épaisseur < 1 mm | épaisseur < 1 mm |

La comparaison des résultats donnés aux Tableaux 2 et 3 montre que, pour l'huile Radiagreen BDMF®, le système (1) donne des résultats au moins égaux ou supérieurs au système. De même, les Tableaux 5 et 6 pour l'huile Radiagreen DW®.

Les performances du système (1) sont très bonnes quelle que soit l'huile de base utilisée, comme le montrent les Tableaux 9 et 11.

### Exemple 2 : comparaison avec des systèmes commerciaux de la société M-I

On a utilisé comme émulsifiants:
- les systèmes Emul HT®/Interdrill FL® (système 5) et Emul HT®/Interdrill FL®/Interdrill LORM® (système 6) de la société M-I (boues 1-3).
- le Versamul® seul ou les systèmes Versamul®/Versacoat® (système 7) et, Versamul®/Versawet® (système 8) de la société M-I (boues 4-7). Truflo MVO ® et Versatrol® sont des réducteurs de filtrat.

La composition des boues est la suivante:
Boue 1 :
   - 80% Radiagreen BDMF®, 20% saumure
   - 3% (EMUL HT®/Interdrill FL®)/huile
   - 0,6% chaux/saumure
   - 4% Truflo 100/saumure
Boue 2 :
   - 80% Radiagreen BDMF®, 20% saumure
   - 3% (EMUL HT®/Interdrill FL®/Interdrill LORM®)/huile
   - 0,6 % chaux/saumure
   - 4% Truflo MVO®/saumure
Boue 3 :
   - 80% Radiagreen BDMF®, 20% saumure
   - 3% (EMUL HT®/Interdrill FL®)/huile
   - 5% chaux/saumure
   - 4% Truflo MVO®/saumure
Boue 4 :
   - 85% Radiagreen BDMF®, 15% saumure
   - 3% Versamul®/huile
   - 5% chaux/saumure
   - 36% Versatrol®/saumure
Boue 5 :
   - 80% Radiagreen BDMF®, 20% saumure
   - 3% (Versamul®/Versacoat®)/huile
   - 0,8 % chaux/saumure
   - 5% Versatrol®/saumure
Boue 6 :
   - 80% Radiagreen BDMF®, 20% saumure
   - 3% (Versamul®Nersacoat®)/huile
   - 3% chaux/saumure
   - 5% Versatrol®/saumure
Boue 7 :
   - 60% Radiagreen BDMF®, 40% saumure
   - 4% (Versamul®/Versawet®)/huile
   - 6% chaux/saumure
   - 2% Versatrol®/saumure

Les résultats des tests sont présentés dans le Tableau 12 ci après.

**Tableau 12**

| Boue complète | Propriétés rhéologiques | | Propriétés de filtration | |
|---|---|---|---|---|
| | avant vieillissement | après vieillissement 120°C | avant vieillissement | après vieillissement 120°c |
| Boue 1 | VA : 35 | VA: 26 | 8 mL | 15 mL |
| | VP: 34 | VP : 25 | filtrat diphasique | filtrat diphasique |
| | YV:2 | YV:2 | | |
| | Gel 0/10 : 4/5 | Gel 0/10 : 2/3 | | |
| Boue 2 | VA: 43 | VA : 42 | 2,0 mL | 2,5 mL |
| | VP: 38 | VP: 36 | | filtrat diphasique |
| | YV: 10 | YV:12 | | |
| | Gel 0/10: 8/9 | Gel 0/10:3/4 | | |
| Boue 3 | VA : 33 | | 0,5 mL | |
| | VP: 29 | | filtrat | |
| | YV : 8 | | monophasique | |
| | Gel 0/10 -/- | | | |
| Boue 4 | VA : 51 : | VA: 45 | 1,3 mL | 14,6 mL |
| | VP: 38 | VP: 43 | filtrat diphasique | filtrat diphasique |
| | YV : 26 | YV: 22 | | |
| | Gel 0/10 : 17/25 | Gel 0/10 -/- | | |
| Boue 5 | VA: 51 | VA : 45 | 3,8 mL | 7,0 mL |
| | VP: 40 | VP : 34 | filtrat diphasique | filtrat diphasique |
| | YV: 22 | YV: 22 | | |
| | Gel 0/10:12/15 | Gel 0/10: 5/7 | | |
| Boue 6 | VA: 48 | VA: 41 | 6,8 mL | 19,6 mL |
| | VP: 43 | VP: 35 | filtrat diphasique | filtrat diphasique |
| | YV:10 | YV:12 | | |
| | Gel 0/10 : 4/5 | Gel 0/10:-/- | | |
| Boue 7 | VA: 92 | Gélification de la boue | mesure inutile | mesure inutile |
| | VP: 80 | | | |
| | YV: 24 | | | |
| | Gel 0/10 : 4/9 | | | |

On voit qu'avec les systèmes (5) et (6), on a obtenu des filtrats diphasiques. Et avec les systèmes (7) et (8), on a obtenu des filtrats diphasiques ou une gélification.

### Exemple 3 : Etude DSC des boues complètes

On a montré par une technique d'analyse calorimétrique DSC que la taille des gouttes d'eau contenues dans la boue complète fabriquée avec le système émulsifiant de l'invention était peu affectée par le vieillissement. Il est en effet très difficile de mesurer la taille dés gouttelettes d'eau dans une boue à l'huile, à cause principalement de la quantité importante de solides contenus dans ce type de fluide. La DSC permet d'analyser un échantillon de boue complète, sans le diluer. On fait subir à cet échantillon un refroidissement jusqu'à observer la cristallisation des gouttelettes d'eau. Plus la température de cristallisation observée est basse, plus les gouttes sont petites (Clausse, D., « Research Techniques Utilizing Emulsions ». In Encyclopedia of Emulsion Technology, Becher, P., Ed. Dekker : New-York, 1985 ; Vol. 2, page 77.)

### - Formulations étudiées :

Elles sont indiquées au Tableau 13 ci-dessous.

**Tableau 13**

| Rôle | Produit choisi | Quantité |
|---|---|---|
| Huile de base | HDF 2000® ou Radiagreen VLV® | 800 mL |
| Saumure | 15 % poids de CaCl₂ | 200 mL |
| Réducteur de filtrat | Pliolite | 3 % en poids par rapport à l'huile |
| Ajusteur de pH | Chaux | 1,3 % en poids par rapport à la saumure |
| Agent viscosifiant | Carbogel® | 5 % en poids par rapport à la saumure |
| Émulsifiant | Système 1 | 3 % en poids par rapport à l'huile |
| Ajusteur de densité | Baryte (BaSO₄) | Quantité nécessaire pour ajuster à d =1,2 |

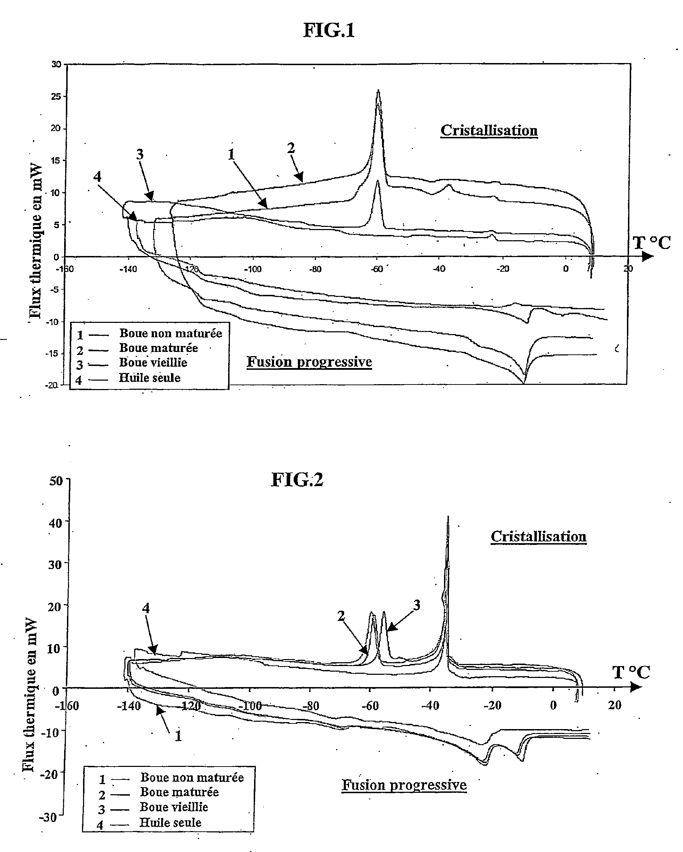

### - Boue à base de HDF 2000® (voir Figure 1)

Au refroidissement, on observe la cristallisation de la phase aqueuse. Comme il n'existe qu'un seul pic gaussien, cela suppose que l'émulsion est bien monodisperse. De plus, quel que soit l'état de la formulation (mûrie ou vieillie), la température de cristallisation est quasiment la même. On observe par la suite, au réchauffement le pic de fusion progressive. Il n'y a en revanche pas de fusion eutectique car il est très difficile de cristalliser totalement la phase dispersée dans une émulsion.

Les températures de fusion sont les mêmes quel que soit l'état de la boue (mûrie ou vieillie) et correspondent bien à la température de fusion théorique d'une solution d'eau à 15 % en poids de CaCl₂, -13°C. De plus, le degré de surfusion (différence entre la température de fusion et la température de cristallisation) étant constant pour les différents états de la boue, -48°C, on peut conclure que la granulométrie du mélange est constante.

### - Boue à base de Radiagreen VLV® (voir Figure 2)

Pour tous les mélanges, on observe la cristallisation de la phase huile à une température de -34°C. Cette cristallisation a toujours lieu a la même température, les signaux se superposent exactement. La cristallisation de la phase aqueuse quant à elle se passe à des températures plus basses. Encore une fois, on n'observe qu'un seul pic de cristallisation. Cela signifie que l'émulsion est bien monodisperse. Cependant, plus la boue a subi de traitement (mûrissement, vieillissement), plus la température du pic de cristallisation est élevée. La différence est surtout visible avec là boue vieillie. Même en répétant les mesures, on retrouve la même tendance. Au réchauffement, la fusion progressive de l'huile à toujours lieu à la même température, -23°C. Seul l'aire du pic varie légèrement. Cela est dû à la différence de volume des échantillons. Le degré de surfusion est le même pour les fluides non-mûri et mûri, 48°C. Pour le fluide vieilli le degré de surfusion et de 46°C. Par conséquent, l'émulsion n'est pas modifiée pendant la phase de mûrissement. Elle est légèrement modifiée lors du vieillissement.

### - Stabilité des émulsions dans le temps

Pour tester la stabilité des formulations, on a refait un mois plus tard les analyses en DSC pour les deux formulations (non-mûries, mûries et vieillies). Ces dernières ont été conservées dans des flacons en verre à température ambiante. Étant donné que lés mélanges ont sédimenté, on les a ré-homogénéisés manuellement.

Les thermogrammes obtenus ont le même profil que ceux obtenus un mois auparavant. Il n'y a ni suppression ni ajout de pic. L'émulsion n'est pas cassée puisque l'on n'observe pas de pic de cristallisation ou de fusion d'eau libre.

Il n'y a pas non plus de décalage des pics de cristallisation. Cela signifie que la taille des gouttes est inchangée. Les émulsions ont toujours la même granulométrie.

Les pics de fusion, eux non plus, ne se sont pas déplacés. Cela permet de dire qu'il n'y a pas eu de modification de la concentration en sel dans la saumure et donc pas d'évaporation.

Les deux formulations sont stables dans le temps et conservent la même granulométrie.

### Exemple 4: Étude de la formation d'hydrates dans les boues HDF 2000® et Radiagreen VLV®

On a étudié les boues suivantes :
- HDF 2000®/système (1)
- Radiagreen VLV®/système (1)
- HDF 2000®/système (8).

- La boue HDF 2000®/système (8) est constituée comme suit :
- 471 g de HDF 2000®
- 6 g de Vèrsatrol®
- 18 g de Versamul®) )
   ( système (8)
- 2,94 g de Versawet® )
- 20 g de chaux
- 15 g de VG69 (argile organophile)
- 322,55 g de saumure (à 15 % en poids de CaCl₂)
- 260,3 g de CaCO₃ Mikhart 10®.

Il a été récemment montré que la DSC (Differential Scanning Calorimetry) pouvait être avantageusement utilisée pour étudier la formation d'hydrates de gaz dans les fluides de forage (Dalmazzone, D., Dalmazzone, C. et Herzhaft, B., DSC : "A New Technique to Characterize Hydrate Formation in Drilling Muds", SPE Journal, June 2002, 196-202).

L'appareil utilisé pour cette partie de l'étude est le DSC111 SËTARAM, qui peut travailler à des pressions allant jusqu'à 100 bar. La boue est tout d'abord soumise à un refroidissement rapide, 10°C/min, jusqu'à la température de l'isotherme (-60°C, -40°C ou -30°C). Le refroidissement est suivi d'une isotherme de durée variable puis d'un réchauffement lent, 1 °C/min, jusqu'à 10°C. Les isothermes ont une durée de 0 min, 10 min, 30 min, 1 h, 2 h et 4 h.

Tout au long de l'expérimentation, les échantillons sont soumis à une pression de méthane de 100 bar.

La boue formulée à l'aide du système émulsifiant (1) est stable quelle que soit l'huile de base (HDF 2000® ou Radiagreen VLV®), et ce même après quelques cycles thermiques refroidissement- isotherme à 60°C - réchauffement. En effet, si l'émulsion était cassée, on observerait la cristallisation de la phase aqueuse et sa fusion (à pression atmosphérique, autour de -13°C).

Au contraire, dans des conditions similaires, la boue HDF 2000®/système (8) a été fortement déstabilisée après un unique cycle de formation - dissociation d'hydrate de méthane à -40°C.

### - Calcul des quantités d'hydrates

On a pris les hypothèses suivantes : ,
- L'enthalpie de dissociation de l'hydrate de méthane est de l'avis général de 430 J/g.
- On suppose qu'elle est indépendante de la température.
- La stoechiométrie la plus communément admise est CH₄ + 6,15 H₂O, ce qui donne une masse molaire de 126,7.

On obtient ainsi :
Boue HDF 2000®/système (1) : 36,06/430 = 0,0839 g d'hydrate, soit 661,88,umol, soit 10,59 mg de CH₄ par g de boue.
Boue Radiagreen VLV®/système (1) : 20,54/430 = 0,0478 g d'hydrate, soit 377,01 µmol, soit 6,03 mg de CH₄ par g de boue.
Boue HDF 2000®/système (8) : 38,67/430 = 0,0899 g d'hydrate, soit 709,79 µmol, soit 11,36 mg de CH₄ par g de boue. (+ le pic eutectique)

Ainsi, dans ces conditions, l'aire des pics de dissociation d'hydrates obtenus pour les formulations à base de Radiagreen VLV®/système (1) est plus faible que pour celles à base de HDF 2000/système (1), qui est plus faible que celle obtenue avec la boue HDF 2000/système (8). La quantité d'hydrates formés est donc moindre dans une formulation à base de Radiagreen VLV®/système (1).

### - Aire du pic de dissociation d'hydrates en fonction de la durée de l'isotherme

**Tableau 13**

| **- 30°C 100 bar** | | |
|---|---|---|
| **Durée de l'isotherme** | **Aire du pic** | |
| | **HDF 2000** | **VLV** |
| 0 min | 222,13 J/g | 126,53 J/g |
| 10 min | 254,00 J/g. | 241,34 J/g |
| 30 min | 296,54 J/g | 245,32 J/g |
| 60 min | 291,20 J/g | 170,52 J/g |
| 120 min | 293,08 J/g | 190,49 J/g |

Les aires des pics sont données en joule par gramme d'eau. Cela confirme que la quantité d'hydrates formés est encore une fois plus faible dans les formulations à base de Radiagreen VLV®.

L'ensemble des résultats présentés est tout à fait conforme aux mesures de solubilité du méthane effectuées dans différentes huiles de base et décrites dans le papier SPE 77475 présenté au SPE Annual Fall Meeting en octobre 2002 "Interactions Between Drilling Fluid and Reservoir Fluid" de N. Bureau et al. Ainsi, la solubilité du méthane est moindre dans les huiles végétales que dans les huiles minérales de longueur de chaîne hydrocarbonée équivalente. L'intérêt des formulations décrites ici est double : non seulement la quantité d'hydrates formés est moindre dans les formulations à base d'huile végétale, mais l'utilisation du système émulsifiant tel que décrit dans l'invention permet l'obtention d'une émulsion très stable sur une très large gamme de température.

### Exemple 5 : Toxicité et biodégradabilité du système selon l'invention ("Water Hazard Classes" "WGK")

La classification « WGK » est donnée selon l"'Administrative Regulation on the Classification of Substances Hazardous to Waters into Water Hazard Classes" (Verwaltungsvorschrift wassergefährdende Stoffe - VwVwS) du 17 mai 1999. La classification "WGK" d'un mélange peut être déterminée, selon Annexe 4 des nouvelles réglementations "VwVwS", par une règle de calcul a partir de la classification "WGK" de chaque constituant du mélange ou sur la base de résultats de tests éco-toxicologiques déterminés sur le mélange.

On a effectué des tests sur les constituants A et B du système (1) utilisé selon l'invention.
1) Toxicité orale aiguë sur le rat OECD 401 : la dose létale LD 50 est de 15 900 mg/l
2) WGK= 1.
3) Toxicité aiguë OECD 203 :
   - LC50 (24h) :pas de toxicité aiguë
   - LC50 (48h) : pas de toxicité aiguë
   - LC50 (72h) :pas de toxicité aiguë
   - LC50 (96h) : pas de toxicité aiguë
4) Biodégradation OECD 301 D (28 j.) : biodégradabilité facile - 83,3 %.

## Revendications

1. Fluide de puits à base d'huile **caractérisé en ce qu'**il comprend un système émulsifiant comprenant lui-même :
- au moins constituant A choisi parmi les esters formés entre au moins un acide monocarboxylique, linéaire ou ramifié, contenant de 8 à 24 atomes de carbone et au moins un alcool, linéaire ou ramifié, contenant de 2 à 200 atomes de carbone ;
- et au moins un constituant B consistant en au moins un agent co-tënsioactif non-ionique choisi parmi les acides gras monocarboxyliques insaturés polymérisés.

2. Fluide selon la revendication 1 **caractérisé en ce que** ledit constituant A est formé entre au moins un acide monocarboxylique, linéaire ou ramifié, contenant de 14 à 18 atomes de carbone et au moins un alcool, linéaire ou ramifié, contenant de 6 à 30 atomes de carbone.

3. Fluide selon la revendication 1 ou 2 **caractérisé en ce que** le HLB (équilibre hydrophile -lipophile) dudit constituant A est en général compris entre 2 et 12.

4. Fluide selon la revendication 1 à 3 **caractérisé en ce que** ledit constituant B comprend au moins un acide gras monocarboxylique insaturé de 8 à 18 atomes de carbone dimérisé et/ou au moins au moins un acide gras monocarboxytique insaturé de 8 à 18 atomes de carbone trimérisé.

5. Fluide selon l'une des revendications 1 à 4 **caractérisé en ce que** ledit constituant A est le monooléate de sorbitan et **en ce que** ledit constituant B est un dimère d'acides gras mono-insaturés en C₁₆-C₁₈.

6. Fluide selon l'une des revendications 1 à 4 **caractérisé en ce que** ledit système émulsifiant comprend de 10 à 95 % en poids de constituant A et de 5 à 90 % en poids dé constituant B.

7. Fluide selon la revendication 6 **caractérisé en ce que** ledit système émulsifiant comprend de 30 à 90 % en poids de constituant A et de 10 à 70 % en poids de constituant B.

8. Fluide selon la revendication 6 **caractérisé en ce que** ledit système émulsifiant comprend de 50 à 80 % en poids de constituant A et de 20 à 50 % en poids de constituant B.

9. Fluide selon l'une des revendications 1 à 8 **caractérisé en ce que** l'huile constituant la phase continue est choisie parmi les gazoles, les pétroles bruts, les l'essences, les kérosènes, les esters d'huiles de source naturelle, végétale ou animale, et les coupes hydrocarbures de faible toxicité comprenant des oléfines ou des n-alcanes.

10. Fluide selon l'une des revendications 1 à 9 **caractérisé en ce que** la concentration en huile de base est comprise entre 10 et 95 % en volume pour une quantité de phase aqueuse comprise entre 5 et 90 % en volume.

11. Fluide selon la revendication 10 **caractérisé en ce que** ladite phase aqueuse est de l'eau douce, de l'eau salée, consistant en eau de mer ou en saumure.

12. Fluide selon l'une des revendications 1 à 11 **caractérisé en ce qu'**il contient en outre de 5 à 25 % en poids de chaux, de 5 à 15 % en poids d'argile traitée organophile et au moins un agent alourdissant choisi parmi le sulfate de baryum, le carbonate de calcium et les oxydes de fer, en une quantité suffisante pour atteindre une densité allant jusqu'à environ 2,4, ainsi qu'une quantité de réducteur de filtrat allant jusqu'à environ 10 % en poids.

13. Utilisation d'un fluide de puits selon l'une des revendications 1 à 12 pour le forage, la complétion ou le workover d'un puits.

## Claims

1. An oil-based well fluid, **characterised in that** it includes an emulsifier system, which itself includes:
- at least constituent A selected from the esters formed from at least one monocarboxylic acid, which is linear or branched, containing 8 to 24 carbon atoms, and at least one alcohol, which is linear or branched, containing 2 to 200 carbon atoms;
- and at least one constituent B consisting of at least one non-ionic cosurfactant agent selected from the polymerised unsaturated monocarboxylic fatty acids.

2. The fluid according to Claim 1, **characterised in that** said constituent A is formed from at least one monocarboxylic acid, which is linear or branched, containing 14 to 18 carbon atoms, and at least one alcohol, which is linear or branched, containing 6 to 30 carbon atoms.

3. The fluid according to Claim 1 or 2, **characterised in that** the HLB (hydrophilic-lipophilic balance) of said constituent A lies, in general, between 2 and 12.

4. The fluid according to Claims 1 to 3, **characterised in that** said constituent B includes at least one dimerised unsaturated monocarboxylic fatty acid with 8 to 18 carbon atoms and/or at least one trimerised unsaturated monocarboxylic fatty acid with 8 to 18 carbon atoms.

5. The fluid according to one of Claims 1 to 4, **characterised in that** said constituent A is sorbitan monoleate and **in that** said constituent B is a dimer of C₁₆-C₁₈ mono-unsaturated fatty acids.

6. The fluid according to one of Claims 1 to 4, **characterised in that** said emulsifier system includes 10 to 95%, by weight, of constituent A and 5 to 90%, by weight, of constituent B.

7. The fluid according to Claim 6, **characterised in that** said emulsifier system includes 30 to 90%, by weight, of constituent A and 10 to 70%, by weight, of constituent B.

8. The fluid according to Claim 6, **characterised in that** said emulsifier system includes 50 to 80%, by weight, of constituent A and 20% to 50%, by weight, of constituent B.

9. The fluid according to one of Claims 1 to 8, **characterised in that** the oil constituting the continuous phase is selected from the gas oils, the crude oils, the petrols, the kerosenes, the esters of oils from a natural source, which is vegetable or animal, and the hydrocarbon fractions with a low toxicity including olefins or n-alkanes.

10. The fluid according to one of Claims 1 to 9, **characterised in that** the concentration of base oil lies between 10 and 95%, by volume, for a quantity of aqueous phase which lies between 5 and 90%, by volume.

11. The fluid according to Claim 10, **characterised in that** said aqueous phase is fresh water or salt water, consisting of sea water or brine.

12. The fluid according to one of Claims 1 to 11, **characterised in that** it further contains 5 to 25%, by weight, of lime, 5 to 15%, by weight, of treated organophilic clay and at least one weighting agent selected from barium sulphate, calcium carbonate and the iron oxides, in a quantity which is sufficient in order to obtain a density ranging up to approximately 2.4, as well as a quantity of filtrate reducer ranging up to approximately 10%, by weight.

13. Use of a well fluid according to one of Claims 1 to 12 for the drilling, the completion or the workover of a well.

## Patentansprüche

1. Schachtfluid auf Ölbasis, **dadurch gekennzeichnet, dass** es ein emulgierendes System aufweist, selbst umfassend:
- mindestens einen Bestandteil A, der unter den Estern ausgewählt wird, gebildet von mindestens einer linearen oder verzweigten Monocarboxylsäure, die 8 bis 24 Kohlenstoffatome enthält, und von mindestens einem linearen oder verzweigten Alkohol, der 2 bis 200 Kohlenstoffatome enthält;
- und mindestens einen Bestandteil B, der in mindestens einem nicht ionischen co-spannungsaktiven Wirkstoff besteht, der unter den polymerisierten ungesättigten Monocarboxylfettsäuren ausgewählt wird.

2. Fluid nach Anspruch 1, **dadurch gekennzeichnet, dass** der Bestandteil A zwischen mindestens einer linearen oder verzweigten Monocarboxylsäure, die 14 bis 18 Kohlenstoffatome enthält, und mindestens einem linearen oder verzweigten Alkohol, der 6 bis 30 Kohlenstoffatome enthält, gebildet ist.

3. Fluid nach Anspruch 1 oder 2, **dadurch gekennzeichnet, dass** das HLB (Hydrophil-Lipophil-Gleichgewicht) des Bestandteils A zwischen 2 und 12 beträgt.

4. Fluid nach Anspruch 1 bis 3, **dadurch gekennzeichnet, dass** der Bestandteil B mindestens eine dimerisierte ungesättigte Monocarboxylfettsäure mit 8 bis 18 Kohlenstoffatomen und/oder mindestens eine trimerisierte ungesättigte Monocarboxylfettsäure mit 8 bis 18 Kohlenstoffatomen umfasst.

5. Fluid nach einem der Ansprüche 1 bis 4, **dadurch gekennzeichnet, dass** der Bestandteil A Sorbitanmonooleat ist, und dass der Bestandteil B ein Dimer von bei C₁₆-C₁₈ mono-ungesättigten Fettsäuren ist.

6. Fluid nach einem der Ansprüche 1 bis 4, **dadurch gekennzeichnet, dass** das emulgierende System 10 bis 95 Gew.-% eines Bestandteils A und 5 bis 90 Gew.-% eines Bestandteils B umfasst.

7. Fluid nach Anspruch 6, **dadurch gekennzeichnet, dass** das emulgierende System 30 bis 90 Gew.-% eines Bestandteils A und 10 bis 70 Gew.-% eines Bestandteils B umfasst.

8. Fluid nach Anspruch 6, **dadurch gekennzeichnet, dass** das emulgierende System 50 bis 80 Gew.-% eines Bestandteils A und 20 bis 50 Gew.-% eines Bestandteils B umfasst.

9. Fluid nach einem der Ansprüche 1 bis 8, **dadurch gekennzeichnet, dass** das Öl, das die kontinuierliche Phase bildet, unter den -Gasölen, den Rohölen, den Benzinen, den Kerosinen, den Ölestern aus natürlicher, pflanzlicher oder tierischer Quelle, und den Kohlenwasserstofffraktionen von geringer Toxizität, die Olefine oder n-Alkane umfassen, ausgewählt wird.

10. Fluid nach einem der Ansprüche 1 bis 9, **dadurch gekennzeichnet, dass** die Konzentration an Basisöl zwischen 10 und 95 Vol.-% bei einer Menge der wässerigen Phase zwischen 5 und 90 Vol.-% beträgt.

11. Fluid nach Anspruch 10, **dadurch gekennzeichnet, dass** die wässerige Phase weiches Wasser, Salzwasser, bestehend in Meerwasser oder Salzlösung, ist.

12. Fluid nach einem der Ansprüche 1 bis 11, **dadurch gekennzeichnet, dass** es ferner 5 bis 25 Gew.-% Kalk, 5 bis 15 Gew.-% organophil behandelten Ton und mindestens einen Beschwerungswirkstoff, der unter Baryumsulfat, Kalziumkarbonat und den Eisenoxyden ausgewählt wird, in einer ausreichenden Menge umfasst, um eine Dichtigkeit bis zu ungefähr 2,4 sowie eine Filtratreduktionsmenge bis zu ungefähr 10 Gew.-% zu erreichen.

13. Verwendung eines Schachtfluids nach einem der Ansprüche 1 bis 12 zum Bohren, Komplettieren oder Workover eines Schachtes.
